# EUROPÄISCHE PATENTSCHRIFT

(11) **EP 1 620 300 B1**
(45) Veröffentlichungstag und Bekanntmachung des Hinweises auf die Patenterteilung: **15.07.2009**
(21) Anmeldenummer: 04726844.6
(22) Anmeldetag: 10.04.2004
(51) Int. Cl.: B62B 1/00

(54) **WAGENPULK**
AGGREGATE OF VEHICLES
ENSEMBLE DE CHARIOTS

(30) Priorität: 06.05.2003 DE 10320032
(43) Veröffentlichungstag der Anmeldung: 01.02.2006
(73) Patentinhaber: WANZL METALLWARENFABRIK GMBH, D-89336 Leipheim (DE)
(72) Erfinder: HEINISCH, Klaus, 86513 Ursberg / Bayersried (DE)
(86) Internationale Anmeldenummer: PCT/DE2004/000751
(87) Internationale Veröffentlichungsnummer: WO 2004/098977

(56) Entgegenhaltungen:
- WO-A-90/11922
- DE-U- 29 909 798
- US-B1- 6 260 643
- US-B2- 6 406 250

## Beschreibung

Die Erfindung betrifft einen Wagenpulk, mit einer Anzahl ineinandergeschobener und eine Reihe bildender, von Hand bewegbarer Transportwagen, mit einem fahrbaren Zuggerät, das zum Ziehen der Reihe bestimmt ist und mit einem Befestigungsband, das zum Zusammenhalten der Reihe vorgesehen ist, wobei die beiden Enden des Befestigungsbandes eine Befestigungsvorrichtung aufweisen, die zum Befestigen am ersten und am letzten Transportwagen der Reihe bestimmt sind.

Wagenpulks dieser Art findet man auf Flughäfen, auf Bahnhöfen oder auch bei Selbstbedienungsgeschäften wo es gilt, den dort befindlichen Personen entweder Gepäcktransportwagen oder Einkaufswagen zur Verfügung zu stellen. Die Pulks werden beim Einsammeln und Wegfahren dieser Transportwagen gebildet, wobei der durch ein Befestigungsband zusammengehaltene Wagenpulk von einem Zuggerät gezogen wird.

Das deutsche Gebrauchsmuster G 85 29 340.7 U1 beschreibt eine Befestigungseinrichtung für eine Reihe ineinandergeschachtelter Einkaufswagen. Anstelle eines Befestigungsbandes tritt hier eine längenverstellbare, an ihren Enden mit Halteeinrichtungen versehene Zugstange, die imstande ist, eine Reihe von Einkaufswagen zum Zwecke des Verschiebens oder Wegfahrens zusammen zu halten. Durch die starre Zugstange ist es fast nicht möglich, mit einer Reihe zusammengehaltener Einkaufswagen einen Bogen oder eine Kurve zu fahren.

Die gattungsgemäße US 6,406,250 B2 beschäftigt sich mit einem Wagenpulk aus ineinandergeschobenen Einkaufswagen, der mit Hilfe eines spannbaren Zugseiles zusammengehalten wird. Dabei wird das als Befestigungsband bestimmte Zugseil so angezogen, dass Einkaufswagen, die sich im hinteren Bereich der Reihe befinden, teilweise angehoben werden, so dass sich ein derart hergestellter Wagenpulk relativ leicht um eine Kurve bewegen lässt. Das Zugseil benötigt am hinteren Ende eine eigens dafür geschaffene Spannvorrichtung, durch welche hohe Spannkräfte herstellbar sind. Das starke Anspannen bewirkt zwangsläufig ein Verldemmen der ineinandergeschachtelten Einkaufswagen, die deshalb nur mit großem Kraftaufwand dem Wagenpulk wieder entnommen werden können. Dies ist nachteilig.

Das deutsche Gebrauchsmuster DE 299 09 798 U1 offenbart einen Wagenpulk mit ineinandergeschobenen Gepäcktransportwagen, die durch ein Befestigungsband in einer Reihe zusammengehalten und von einem Zuggerät gezogen werden. Damit beim Kurvenfahren mit einem derartigen Wagenpulk keine Gepäcktransportwagen fliehkraftbedingt umstürzen, sind zwischen den Gepäcktransportwagen in Abständen sogenannte Führungsräder eingefügt, die besagtes Umstürzen der Gepäcktransportwagen verhindern sollen. Zum Einsammeln und zum Bilden einer Reihe müssen deshalb mehrere Führungsräder, die jeweils Bestandteil eines gestellartigen Rahmens sind, mitgeführt werden. Diese Maßnahme erweist sich als umständlich und zum Herstellen der Führungsräder ist ein erheblicher Arbeitsaufwand notwendig.

Schließlich sind Wagenpulks bekannt, deren Befestigungsband zugelastisch ausgebildet ist. Dies hat den Nachteil, dass beim Anfahren eines Wagenpulks der unmittelbar dem Zuggerät folgende Transportwagen vom Zuggerät ein Stück weit aus dem Wagenpulk herausgezogen wird, da die Kraft, die erforderlich ist, den Wagenpulk ziehend in Bewegung zu setzen erheblich größer ist, als jene Kraft, die aufzuwenden ist, das elastische Band ein Stück weit in die Länge zu ziehen. Die Folge ist, das ein Wagenpulk dieser Art beim Bewegen wabernde Schlingerbewegungen ausführt.

Es ist Aufgabe der Erfindung, einen Wagenpulk der eingangs genannten Art unter Vermeidung der eben geschilderten Nachteile so zu verbessern, dass dieser mit einem relativ einfachen und billigen Befestigungsband auskommt. Dabei soll das Befestigungsband so gestaltet sein, dass mit dem Wagenpulk Kurven und Bögen gefahren werden können, ohne dass sich einzelne Transportwagen lösen oder umfallen oder schlingernde Bewegungen ausführen.
Die Lösung der Aufgabe besteht darin, dass zwischen den beiden Enden des Befestigungsbandes zumindest eine weitere Befestigungsvorrichtung am Befestigungsband angeordnet ist.

Die wenigstens eine weitere Befestigungsvorrichtung wird in Abständen an einzelnen Transportwagen des Wagenpulks befestigt. Dadurch entstehen bevorzugt gleichmäßig lange Gruppen fest zusammengehaltener Transportwagen, die Kettengliedern gleich sich auf Kurvenbahnen bewegen lassen. Der Wagenpulk besteht demnach aus einzelnen kleinen Wagenpulks, die sich gegeneinander abstützen und so ein Lösen oder Umkippen einzelner Transportwagen verhindern. Ein Schlingern einzelner, insbesondere am Ende des Wagenpulks befindlicher Transportwagen wird ebenso sicher verhindert wie ein unkontrolliertes Ausschlagen der hinteren Transportwagen zu den Seiten hin. Da die Befestigungsvorrichtungen durch einzelne einfache Haken gebildet und das Befestigungsband gleich oder ähnlich dem Band eines Autosicherheitsgurtes ist, kann das Befestigungsband äußerst kostengünstig hergestellt werden. Im Sinne der Erfindung erweisen sich die geschilderten Merkmale als äußerst vorteilhaft.

Die Erfindung wird anhand der schematisch dargestellten Zeichnung näher erläutert. Es zeigt
Fig. 1 einen Wagenpulk von der Seite;
Fig. 2 einen Wagenpulk bei Kurvenfahrt in einer Ansicht von oben sowie
Fig. 3 ein Befestigungsband.

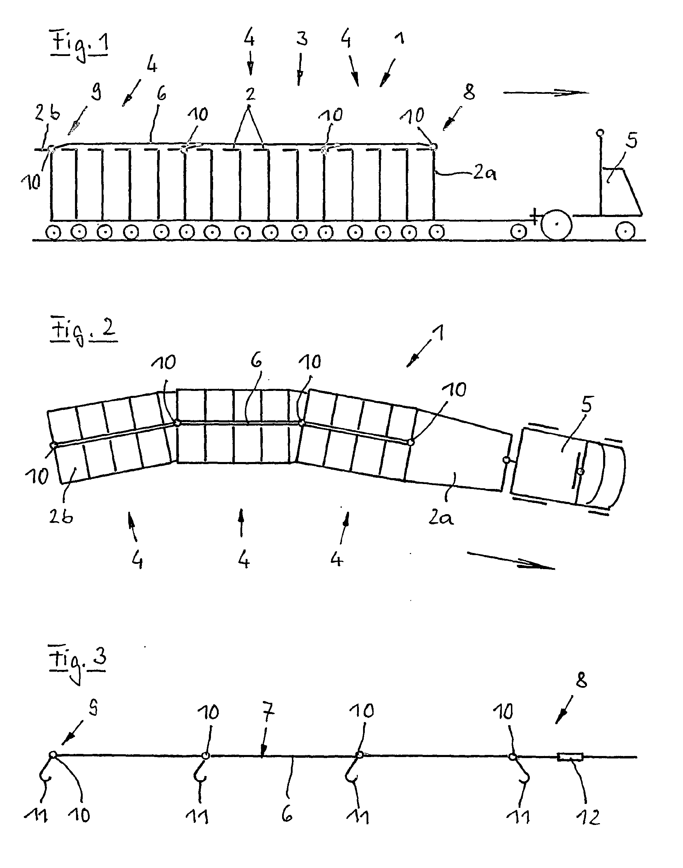

Fig. 1 zeigt einen Wagenpulk 1 mit einer Anzahl ineinandergeschobener von Hand bewegbarer Transportwagen 2, 2a, 2b, die eine Reihe 3 bilden. An den vordersten Transportwagen 2a der Reihe 3 ist ein Zuggerät 5 angekoppelt. Der Pfeil zeigt die Zugrichtung an. Die Reihe 3 der Transportwagen 2, 2a, 2b wird durch ein Befestigungsband 6 überbrückt, das mit einer am vorderen Ende 8 des Befestigungsbandes 6 befindlichen Befestigungsvorrichtung 10 am vorderen Transportwagen 2a und mit einer am hinteren Ende 9 vorgesehenen Befestigungsvorrichtung 10 am hinteren Transportwagen 2b befestigt ist. Dadurch wird die Reihe Transportwagen 2, 2a, 2b zusammengehalten. Zwischen den beiden Enden 8, 9 des Befestigungsbandes 6 ist wenigstens eine weitere Befestigungsvorrichtung 10 am Befestigungsband 5 vorgesehen. Im Beispiel sind es zwei weitere Befestigungsvorrichtungen 10. Alle Befestigungsvorrichtungen 10 sind in bevorzugt regelmäßigen Abständen angeordnet und an den Transportwagen 2, 2a, 2b so befestigt, dass jeweils ein kleiner separater Minipulk 4 gebildet ist. Die in Fig. 1 gezeigte Anordnung lässt drei Minipulks 4 entstehen, die alle in einer Reihe 3 mit dem Befestigungsband 6 verbunden sind und somit den Wagenpulk 1 bilden.

In einer Draufsicht zeigt Fig. 2 den in Fig. 1 beschriebenen Wagenpulk 1 zusammen mit dem Zuggerät 5 bei einer Kurvenfahrt. Man erkennt deutlich die drei Minipulks 4, die durch das Befestigungsband 6 zusammengehalten in Winkeln zueinander angeordnet sind. Durch die gleichmäßigen Abstände der Befestigungsvorrichtungen 10 sind drei gleich lange Minipulks 4 gebildet. Der Pfeil zeigt wieder die Zugrichtung an.

Fig. 3 zeigt ein Befestigungsband 6. An oder nahe der beiden Enden 8, 9 befindet sich je eine Befestigungsvorrichtung 10. Zwischen den Enden 8, 9 sind weitere Befestigungsvorrichtungen 10 angeordnet. Es erweist sich als zweckmäßig, die Abstände der Befestigungsvorrichtungen 10 so zu wählen, dass jeder Minipulk 4 beispielsweise durch fünf Transportwagen 2, oder 2, 2 a, oder 2, 2b gebildet ist. Das schließt natürlich nicht aus, dass auch andere Abstände möglich sind, um Minipulks 4 mit mehr oder weniger als fünf Transportwagen 2 zu bilden. Im Beispiel sind die Befestigungsvorrichtungen 10 durch simple Haken 11 gebildet, die beispielsweise an den Schiebeeinrichtungen der Transportwagen 2, 2a, 2b oder an kleinen Körben, die sich unterhalb der Schiebeeinrichtungen befinden, eingehängt werden. Es können auch andere zweckmäßige Stellen zum Befestigen des Befestigungsbandes 6 ausgewählt werden. Letzteres hängt von der Form der Transportwagen 2, 2a, 2b ab, die bevorzugt als Gepäcktransportwagen, als Plattformwagen oder auch als bekannte Einkaufswagen gestaltet sein können und mit oder ohne bekannte Griffbügelbremse ausgestattet sind. Die Befestigungsvorrichtungen 10 können ebenfalls dem jeweiligen Anwendungszweck entsprechend unterschiedlich gestaltet sein, beispielsweise als federunterstützte Schnappriegel bekannter Bauart. Ebenso ist es möglich, das Befestigungsband 6 mit einer Spanneinrichtung 12, gleich oder ähnlich der eines Autositzgurtes auszustatten, um das Befestigungsband 6 beim Anbringen an einer Reihe 3 von Transportwagen 2, 2a, 2b nachspannen zu können. Das Band 7 des Befestigungsbandes 6 braucht nicht dehnbar zu sein.

## Patentansprüche

1. Wagenpulk (1), mit einer Anzahl ineinandergeschobener und eine Reihe (3) bildender, von Hand bewegbarer Transportwagen (2, 2a, 2b), mit einem fahrbaren Zuggerät (5), das zum Ziehen der Reihe (3) bestimmt ist und mit einem Befestigungsband (6), das zum Zusammenhalten der Reihe (3) vorgesehen ist, wobei die beiden Enden (8, 9) des Befestigungsbandes (6) eine Befestigungsvorrichtung (10) aufweisen, die zum Befestigen am ersten und am letzten Transportwagen (2a, 2b) der Reihe bestimmt sind, **dadurch gekennzeichnet, dass** zwischen den beiden Enden (8, 9) des Befestigungsbandes (6) zumindest eine weitere Befestigungsvorrichtung (10) am Befestigungsband (6) angeordnet ist.

2. Wagenpulk nach Anspruch 1, **dadurch gekennzeichnet, dass** die Abstände der Befestigungsvorrichtungen (10) so gewählt sind, dass bei angebrachtem Befestigungsband (6) gleich große Minipulks (4) gebildet sind.

3. Wagenpulk nach Anspruch 1 oder 2, **dadurch gekennzeichnet, dass** die Befestigungsvorrichtungen (10) durch Haken (11) oder Schnappriegel gebildet sind.

4. Wagenpulk nach einem der Ansprüche 1 bis 3, **dadurch gekennzeichnet, dass** das Band 7 des Befestigungsbandes (6) nicht dehnbar ist.

5. Wagenpulk nach einem der Ansprüche 1 bis 4, **dadurch gekennzeichnet, dass** das Befestigungsband (6) mit einer Spanneinrichtung (12) ausgestattet ist.

6. Wagenpulk nach einem der Ansprüche 1 bis 5, **dadurch gekennzeichnet, dass** die Transportwagen (2, 2a, 2b) mit oder ohne bekannte Griffbügelbremse ausgestattet sind.

## Claims

1. An aggregate of vehicles (1) comprising a plurality of nested, manually movable trolleys (2, 2a, 2b) forming a row (3), a mobile tractor unit (5) intended to pull the row (3), and a fastening strap (6) provided for holding the row (3) together, wherein the two ends (8, 9) of the fastening strap (6) have a fastening device (10) for fastening the strap to the first and the last trolley (2a, 2b) of the row, **characterised in that** at least one further fastening device (10) is arranged on the fastening strap (6) between the two ends (8, 9) thereof.

2. An aggregate of vehicles according to claim 1, **characterised in that** the spacing of the fastening devices (10) is selected so that mini-trains (4) of equal length are formed when the fastening strap (6) is attached.

3. An aggregate of vehicles according to claim 1 or 2, **characterised in that** the fastening devices (10) are formed by hooks (11) or snap bolts.

4. An aggregate of vehicles according to any one of claims 1 to 3, **characterised in that** the strap (7) of the fastening strap (6) is not extensible.

5. An aggregate of vehicles according to any one of claims 1 to 4, **characterised in that** the fastening strap (6) is provided with a tensioning device (12).

6. An aggregate of vehicles according to any one of claims 1 to 5, **characterised in that** the trolleys (2, 2a, 2b) are fitted with or without a known handlebar brake.

## Revendications

1. Formation de chariots (1), avec une pluralité de chariots transporteurs (2, 2a, 2b) pouvant être déplacés à la main, encastrés les uns dans les autres et formant une file (3), avec un appareil de traction roulant (5), qui est destiné à tirer la file (3), et avec une bande de fixation (6), qui est prévue pour maintenir la file (3) solidarisée, sachant que chacune des deux extrémités (8, 9) de la bande de fixation (6) présentent un dispositif de fixation (10) qui est destiné à être fixé respectivement sur le premier chariot transporteur (2a) et sur le dernier chariot transporteur (2b) de la file, **caractérisée en ce qu'**au moins un dispositif de fixation supplémentaire (10) est disposé sur la bande de fixation (6) entre les deux extrémités (8, 9) de la bande de fixation (6).

2. Formation de chariots selon la revendication 1, **caractérisée en ce que** les distances entre les dispositifs de fixation (10) sont choisies de telle sorte que, lorsque la bande de fixation (6) est mise en place, des mini-formations (4) de même taille sont formées.

3. Formation de chariots selon la revendication 1 ou 2, **caractérisée en ce que** les dispositifs de fixation (10) sont formés par des crochets (11) ou des éléments de verrouillage encliquetables.

4. Formation de chariots selon l'une des revendications 1 à 3, **caractérisée en ce que** la sangle (7) de la bande de fixation (6) n'est pas extensible.

5. Formation de chariots selon l'une des revendications 1 à 4, **caractérisée en ce que** la bande de fixation (6) est équipée d'un organe tendeur (12).

6. Formation de chariots selon l'une des revendications 1 à 5, **caractérisée en ce que** les chariots transporteurs (2, 2a, 2b) sont équipés ou non d'un frein connu sur poignée en étrier.
